# EUROPEAN PATENT APPLICATION

(11) **EP 4 060 493 A1**
(43) Date of publication of application: **21.09.2022**
(21) Application number: 21163162.7
(22) Date of filing: 17.03.2021
(51) Int. Cl.: G06F 9/50, G06F 9/54, G06F 1/04

(54) **GENERATING A TIMESTAMP AT A CONTROL UNIT**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE); Luibl, Andreas, 80796 München (DE); Tayel, Muhammad, 85354 Freising (DE)

(57) **Abstract**

Provided is a method for generating a timestamp at a control unit of a vehicle, wherein the control unit comprises at least two cores, a memory being accessible by the at least two cores, and a hardware counter being accessible by the at least two cores. The method comprises generating, at a first one of the two cores, a time-tuple including a master time and a value of the hardware counter at a time of generating the time-tuple; saving the generated time-tuple in the memory; and generating, at a second one of the two cores, the timestamp based on the saved time-tuple and a value of the hardware counter at a time of generating the timestamp.

## Description

The present invention is directed to a method for generating a timestamp at a control unit of a vehicle, and a control unit configured to carry out the method.

For an automated or autonomous vehicle, e.g. a car, there is a lot of data processing including perception from multiple sensors. The data processing may be done on multiple cores and/or threads of an electronic control unit (ECU) thereby taking the data from the sensors as an input and process the data before sending the data to the vehicle.

The data on the multiple cores/treads need to have the same, i.e. a synchronized, timestamp at each core/thread of the ECU. The timestamp distribution between the cores/threads may vary on different operating systems, e.g. with respect to the AUTOSAR Classic platform or the AUTOSAR Adaptive platform (or the Linux platform).

AUTOSAR in general uses a three-layer architecture including a base software (BSW), a Run-Time Environment (RTE) and an application layer (ASW). The BSW comprises standardized software modules (mostly) without a functional task, which provide services necessary to run the functional part of the upper software layers. The RTE is a middleware that abstracts from the network topology for inter- and intra-ECU information exchange between application software components and between the BSW and the ASW. The ASW comprises application software components that interact with the RTE.

More specifically, the AUTOSAR Classic platform architecture distinguishes three software layers running on a microcontroller at the highest level of abstraction: ASW, RTE and BSW. The ASW is largely hardware-independent. Communication between software components and access to BSW is done through RTE, which is the complete interface for applications. BSW is divided into three main layers and complex drivers: Services, ECU abstraction and microcontroller abstraction. The services are also divided into functional groups that provide the infrastructure for system, memory, and communication services. A key concept of the AUTOSAR Classic platform is the Virtual Functional Bus (VFB). This virtual bus is an abstract set of RTEs and decouples applications from the infrastructure. Communication takes place via dedicated ports, i.e. the communication interfaces of the application software must be mapped to these ports. The VFB handles the communication within the individual ECUs and between the ECUs. From an application perspective, no detailed knowledge of lower level technologies or dependencies is required. This supports hardware-independent development and use of application software.

New use cases required the development of the AUTOSAR Adaptive Platform. One example of such a use case is inter alia highly automated driving, where the driver temporarily and/or partially transfers responsibility for driving to the vehicle. This requires, for example, communication with traffic infrastructure (e.g., traffic signs and lights), cloud backends (e.g., access to the latest traffic information or map data), or the use of microprocessors and high-performance computing hardware for parallel processing (e.g., GPUs). In addition, Car-2-X applications require interaction with vehicles and off-board systems. This means that the system must provide secure on-board communication, support for cross-domain computing platforms, smartphone integration, integration of non-AUTOSAR systems, etc. Cloud-based services also require dedicated security measures such as secure cloud interaction and right-of-way for emergency vehicles. They enable remote and distributed services, such as remote diagnostics, over-the-air (OTA) updates, repair and replacement. The core of the AUTOSAR Adaptive Platform is an operating system based on the POSIX standard. The operating system can be used by the application over a subset of POSIX as defined in IEEE1003.13 (namely PSE51). One of the main features of the AUTOSAR Adaptive Platform is service-oriented communication. Two types of interfaces are available for the Adaptive Platform: Services and Application Programming Interfaces (APIs). The platform consists of functional clusters grouped into services and the AUTOSAR Adaptive Platform base. The AUTOSAR Adaptive Platform includes both specification and code.

However, as explained above, the data on the multiple cores and/or the data used in parallel/different processes, so called threads, need to have the same timestamp at each core and/or process. According to known methods of timestamp distribution there is always a delay resulting in an inaccuracy of the distributed timestamp when distributing the timestamp between the cores and/or processes.

An object of the invention is to provide a solution to ensure that at least some, preferably all, cores of a multi core processor and/or processes running on a processor use the same timestamp. More specifically, a solution is provided to ensure that all cores of a multi core processor and/or processes processed on one or more cores simultaneously can get a substantially accurate synchronized timestamp regardless of any delay due to inter core and/or inter process communication.

This object is solved by the features of the independent claims. The dependent claims contain preferred further developments of the invention.

More specifically, the object is solved by a method for generating a timestamp at a control unit of a vehicle. The vehicle may be a car, optionally an automated or highly automated car.

The control unit comprises at least two cores, a memory being accessible by the at least two cores, and a hardware counter being accessible by the at least two cores. The method comprises generating, at a first one of the at least two cores, a time-tuple including a master time and a value of the hardware counter at a time of generating the time-tuple; saving the generated time-tuple in the memory; and generating, at a second one of the at least two cores, the timestamp based on the saved time-tuple and a value of the hardware counter at a time of generating the timestamp.

Additionally or alternatively, the control unit is configured to carry out at least two threads. The threads may be carried out simultaneously and/or the threads may be carried out on the same core or on different cores of the control unit. The control unit comprises a memory being accessible by the at least two threads, and a hardware counter being accessible by the at least two threads. The method comprises generating, at a first one of the at least two threads, a time-tuple including a master time and a value of the hardware counter at a time of generating the time-tuple; saving the generated time-tuple in the memory; and generating, at a second one of the at least two threads, the timestamp based on the saved time-tuple and a value of the hardware counter at a time of generating the timestamp.

The hardware counter may comprise a monotonic clock. The time-tuple is not limited to the master time and the value of the hardware counter the time of generating the time-tuple, but may additionally include an information about a synchronization status indicating if a time base/local time of the control unit is in synchronization with a time master providing the master time. Also other information required for successful time synchronization may form part of the time-tuple.

Generating the timestamp may comprise computing, at the second one of the at least two cores, a difference between the value of the hardware counter included in the time-tuple and the value of the hardware counter at the time of generating the timestamp; and updating the master time included in the time-tuple based on the computed difference to generate a local time to be used in or as the timestamp.

Additionally or alternatively, generating the timestamp may comprise computing, at the second one of the at least two threads, a difference between the value of the hardware counter included in the time-tuple and the value of the hardware counter at the time of generating the timestamp; and updating the master time included in the time-tuple based on the computed difference to generate a local time to be used in or as the timestamp.

The first one of the two cores/threads may be called master core/thread and the second one of the two cores/threads may be called slave core/thread. The memory may be called shared buffer since it may be used by both cores/threads. The control unit may be an electronic control unit comprising an AUTOSAR platform, preferably an AUTOSAR Adaptive platform, and/or the Linux platform.

The second one of the at least two cores may comprise an application software layer, and the timestamp may be generated at the application software layer.

Additionally or alternatively, the second one of the at least two threads may comprise an application software layer, and the timestamp may be generated at the application software layer.

The control unit may be connected to a communication bus, e.g., an Ethernet bus, comprising a master clock. The method may further comprise receiving, at the control unit, the master time used for generating the time-tuple from the master clock.

The first one of the at least two cores may comprise a basis software layer and an application software layer. The time-tuple may be generated at the basis software layer of the first one of the at least two cores and sent from the basis software layer of the first one of the at least two cores via the application software layer of the first one of the at least two cores to the memory.

Additionally or alternatively, the first one of the at least two threads may comprise a basis software layer and an application software layer. The time-tuple may be generated at the basis software layer of the first one of the at least two threads and sent from the basis software layer of the first one of the at least two threads via the application software layer of the first one of the at least two threads to the memory.

The at least two cores and/or threads may use the so called end-to-end protection of the AUTOSAR standard.

More specifically, a counter and a checksum may be added, at the application layer of the first one of the at least two cores/threads, to the time-tuple before the time-tuple is sent from the application layer to the memory.

The counter and the checksum may be saved together with the time-tuple in the memory.

The second one of the at least two cores may check whether there was a communication failure based on the counter and the checksum saved together with the time-tuple in the memory before, during or after generating the timestamp.

Additionally or alternatively, the second one of the at least two threads may check whether there was a communication failure based on the counter and the checksum saved together with the time-tuple in the memory before, during or after generating the timestamp.

Furthermore a control unit for a vehicle may be provided. The control unit comprises at least two cores, a memory being accessible by the at least two cores, and a hardware counter being accessible by the at least two cores.

A first one of the two cores may be configured to generate a time-tuple including a master time and a value of the hardware counter at a time of generating the time-tuple. The first one of the two cores is configured to save the generated time-tuple in the memory. The second one of the two cores is configured to generate a timestamp based on the saved time-tuple and a value of the hardware counter at a time of generating the timestamp.

A first one of the two threads may be configured to generate a time-tuple including a master time and a value of the hardware counter at a time of generating the time-tuple. The first one of the two cores is configured to save the generated time-tuple in the memory. The second one of the two cores is configured to generate a timestamp based on the saved time-tuple and a value of the hardware counter at a time of generating the timestamp.

The control unit may be configured to carry out the above described method. The above given description with respect to the method applies mutatis mutandis to the control unit.

In the following, the above given abstract description is summarized in other words and concretized. As described above, the control unit is preferably an electronic control unit (ECU) being based on an AUTOSAR Adaptive platform and comprising multiple cores. Therefore, the terminology used in the following description is based on the AUTOSAR Adaptive Platform standard.

One core of the multiple cores act as a master core and the other cores act as slave cores. Each core may comprise an application software component (ASW) called 'Stbm Lite' and a synchronized time-base manager (Stbm) comprising a time synchronization (Tsyn) module in a basis software (BSW) of the platform. The Tsyn module may be based on Ethernet, CAN or Flexray stack.

The control unit may comprises a hardware (HW) timer (e.g., with ASIL B or higher) located in a microcontroller abstraction layer (Mcal) to provide a local time to the Tsyn module of the master core and a shared buffer where a time-tuple can be stored. The shared buffer may be used by all cores.

The basic principle of the invention may be formulated as to provide a solution to ensure that all cores of a multi core processor can get an accurate synchronized timestamp regardless of any delay due to inter core/process communication with help of the shared buffer, i.e. the shared memory, and a local timestamp generated at the cores based on the time-tuple and the local time from HW timer.

More specifically, the HW timer may provide the same timestamps of local time to each core of the multi core processor via the respective Tsyn module. The Stbm with the Tsyn module may provide the time-tuple to ASW Stbm Lite with end-to-end (EE) protection to avoid any communication failure. The ASW Stbm Lite can work either as a normal run-time environment (RTE) or complex device driver (CDD) so that it can take the time-tuple without going through the RTE. On the master core, the ASW Stbm Lite will send the same time-tuple to the shared buffer with E2E protection after receiving this time-tuple.

All the other cores, i.e. the slave cores, which need to receive an accurate time-tuple being synchronized to the same time base can access the shared buffer using their respective Stbm Lite module and copy the time-tuple stored in the shared buffer upon its updated by the Stbm Lite module of the master core.

In addition to that, all slave cores may read the local time from the HW timer from Mcal. Instead of sending the "GetCurrentTime" from the Stbm module from the master core to the slave cores resulting in delay, the respective Stbm Lite module of the slave cores may use the time-tuple from the shared buffer together with the current local time from HW timer to generate the timestamp.

Thus, the Application SW which need the "GetCurrentTime" will not send a request to Stbm module in the BSW but instead calls the 'Stbm Lite' module on its respective core which may then provide the timestamp to the respective function call.

In this case there will be no effect even though there might be a processing delay, since the master core does not need to write the data cyclically (which might result in a delay from 5ms to 10ms) into the shared buffer, or a delay due to inter core/process communication.

The solution can be used for an ASIL or a QM system according to an integrity level of the verification of the time-tuple and the time synchronization.

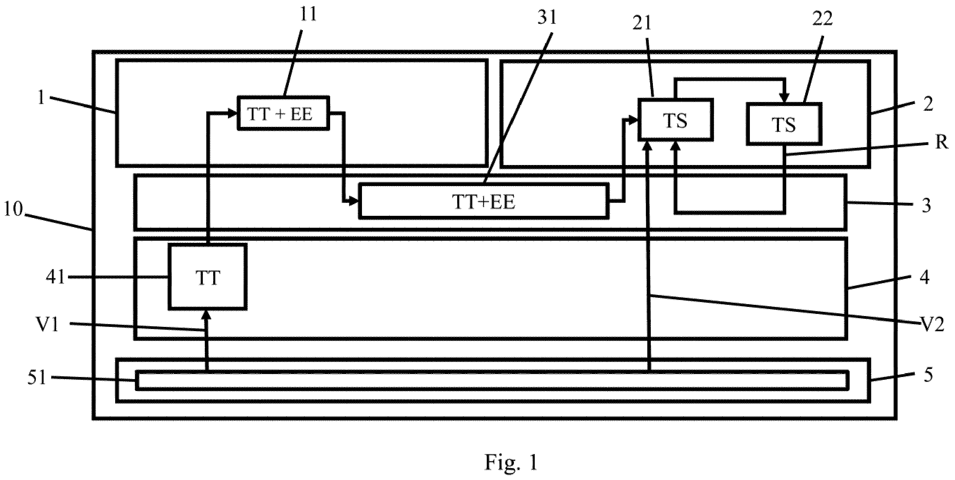

In the following, a description of an embodiment of the present invention is given with respect to figure 1.
- Fig. 1: depicts schematically a control unit of a vehicle configured to carry out a method for generating a timestamp.

As can be gathered from figure 1, the control unit 10 comprises a first core 1, a second core 2, a run time environment layer 3, a basic software layer 4 and a hardware layer 5.

The first core 1 comprises at an application software layer thereof a timestamp generation module 11 acting as a master module. The second core 2 comprises at an application software layer thereof a timestamp generation module 21 acting as a slave module and an application module 22. The timestamp generation module 11 may also be called time-tuple TT extraction module.

The run time environment layer 3 comprises a memory 31 being accessible by the at least two cores 1, 2, more specifically by the timestamp generation modules 11, 21, respectively.

The basic software layer comprises a time-tuple generation module 41 being accessible by the timestamp generation module 11 of the first core 1.

The hardware layer 5 comprises a hardware counter 51 being accessible by the at least two cores 1, 2, more specifically by the timestamp generation modules 11, 21, respectively, and the time-tuple generation module 41.

The above described control unit 1 is configured to carry out the method for generating the timestamp TS as will be explained in detail below.

The first core 1 is configured to generate a time-tuple TT including a master time and a value V1 of the hardware counter 51 at a time of generating the time-tuple TT. The first core 1 is also configured to save the generated time-tuple TT in the memory 31. The second core 2 is configured to generate the timestamp TS based on the saved time-tuple TT and a value V2 of the hardware counter 51 at a time of generating the timestamp TS.

More specifically, in a first step of the method, the time-tuple generation module 41 generates the time-tuple TT including the master time and the value V1 of the hardware counter 51 at the time of generating the time-tuple TT. Therefore, the control unit 10, more specifically the time-tuple generation module 41, receives the master time used for generating the time-tuple TT from a (not shown) master clock of a communication bus to which the control unit 10 is connected.

In a second step of the method, the timestamp generation module 11 of the first core 1 gets the generated time-tuple TT from the time-tuple generation module 41 and carries out an end-to-end-protection method. Thereby, the timestamp generation module 11 of the first core 1 adds a counter and a checksum EE to the time-tuple TT before the time-tuple TT is sent together with the counter and the checksum EE from the timestamp generation module 11 of the first core 1 to the memory 31.

In case of any EE failure detected by the timestamp generation module 11 of the first core 1 an error flag may be added to the time-tuple TT, so that all applications on other cores will be informed that the time-tuple TT is incorrect and should not be used for safety critical applications.

In a third step of the method, the time-tuple TT as well as the counter and the checksum EE are saved together in the memory 31.

That is, the time-tuple TT is generated at the basis software layer 4 of the first core 1 and sent from the basis software layer 4 of the first core 1 via the application software layer of the first core 1 to the memory 31.

In a fourth step of the method, the timestamp TS is generated by the timestamp generation module 21 of the second core 2 based on the saved time-tuple TT and the value V2 of the hardware counter 51 at a time of generating the timestamp TS.

More specifically, the application module 22 being configured to carry out an application, requests the timestamp TS from the timestamp generation module 21 of the second core 2 by sending a request R via the run time environment layer 3 to the timestamp generation module 21 of the second core 2.

Triggered by this request R, the timestamp generation module 21 of the second core 2 takes or gets the time-tuple TT together with the counter and the checksum EE from the memory 31.

Based on the received counter and checksum EE the timestamp generation module 21 of the second core 2 checks if the time-tuple TT is valid, i.e. transmitted without any errors.

In case of any EE failure detected by the timestamp generation module 21 of the second core 2 an error flag may be added to the time-tuple TT, so that all applications on other cores will be informed that the time-tuple TT is incorrect and should not be used for safety critical applications.

If the time-tuple TT is valid, the timestamp generation module 21 gets or takes the value V2 of the hardware counter 51 at the time of generating the timestamp TS, and computes a difference between the value V1 of the hardware counter 51 included in the time-tuple TT and the value V2 of the hardware counter 51 at the time of generating the timestamp TS. Based on the computed difference, the timestamp generation module 21 of the second core 2 updates the master time included in time-tuple TT to generate a local time to be used as the timestamp TS. Updating the master time may include adding the computed difference to the master time included in the time-tuple TT.

The thus generated timestamp TS is sent from the timestamp generation module 21 of the second core 2 to the application module 22 in a fifth step of the method. The application module 22 may use the received timestamp TS in a process carried out by the application module 22.

With the above described method a timestamp can be generated with a given safety integrity as long as the hardware counter 51, the shared buffer 31, the time-tuple generation module 41 and/or the timestamp generation modules 11, 21 fulfill the safety integrity. It is for example possible to ensure time distribution between different cores and/or different threads within an accuracy of 1 ms or a maximum delay between different cores with less than 1 ms.

The above description relates to a control unit comprising at least two cores 1, 2. However, additionally or alternatively, it is also possible that the control unit is configured to carry out at least two threads optionally simultaneously on one or both of the above described cores 1, 2.

Then, in the first step S1 of the method, the time-tuple TT including the master time and the value of the hardware counter 51 at the time of generating the time-tuple, is generated at a time-tuple generation module of a first one of the at least two threads.

In a second step of the method, a timestamp generation module of the first thread gets the generated time-tuple TT from the time-tuple generation module and carries out an end-to-end-protection method. Thereby, the timestamp generation module of the first thread adds a counter and a checksum EE to the time-tuple TT before the time-tuple TT is sent together with the counter and the checksum EE from the timestamp generation module of the first thread 1 to the memory 31.

In a third step, the time-tuple TT as well as the counter and the checksum EE are saved together in the memory 31.

In a fourth step of the method, the timestamp TS is generated by a timestamp generation module of the second thread based on the saved time-tuple TT and the value V2 of the hardware counter 51 at a time of generating the timestamp TS.

Furthermore, the above given description with respect to the inter core time synchronization applies mutatis mutandis to the inter thread time synchronization.

### Reference signs list

- 1: first core
- 11: timestamp generation module
- 2: second core
- 21: timestamp generation module
- 22: application module
- 3: run time environment layer
- 31: memory (e.g., shared buffer)
- 4: basis software layer
- 41: time-tuple generation module
- 5: hardware layer
- 51: hardware counter
- 10: control unit
- EE: end-to-end protection
- TS: timestamp
- TT: time-tuple
- V1: value V1 of the hardware counter at the time of generating the time-tuple
- V2: value of the hardware counter at the time of generating the timestamp
- R: request

## Claims

1. A method for generating a timestamp (TS) at a control unit (10) of a vehicle,
- wherein the control unit (10) comprises at least two cores (1, 2) and/or is configured to carry out at least two threads optionally simultaneously,
- wherein the control unit comprises a memory (31) being accessible by the at least two cores (1, 2) and/or threads, and a hardware counter (51) being accessible by the at least two cores (1, 2) and/or the at least two threads,
**characterized in that** the method comprises:
- generating, at a first one of the at least two cores (1) and/or at a first one of the at least two threads, a time-tuple (TT) including a master time and a value (V1) of the hardware counter (51) at a time of generating the time-tuple (TT),
- saving the generated time-tuple (TT) in the memory (31), and
- generating, at a second one of the two cores (2) and/or at a second one of the at least two threads, the timestamp (TS) based on the saved time-tuple (TT) and a value (V2) of the hardware counter (51) at a time of generating the timestamp (TS).

2. The method according to claim 1,
**characterized in that** generating the timestamp (TS) comprises:
- computing, at the second one of the at least two cores (2) and/or at the second one of the at least two threads, a difference between the value (V1) of the hardware counter (51) included in the time-tuple (TT) and the value (V2) of the hardware counter (51) at the time of generating the timestamp (TS), and
- updating the master time included in the time-tuple (TT) based on the computed difference to generate a local time to be used in or as the timestamp (TS).

3. The method according to claim 1 or 2,
- wherein the second one of the at least two cores (2) and/or the second one of the at least two threads comprises an application software layer,
**characterized in that:**
- the timestamp (TS) is generated at the application software layer.

4. The method according to any one of claims 1 to 3,
- wherein the control unit (10) is connected to a communication bus comprising a master clock,
**characterized in that** the method further comprises:
- receiving, at the control unit (10), the master time used for generating the time-tuple (TT) from the master clock.

5. The method according to any one claims 1 to 4,
- wherein the first one of the at least two cores (1) and/or the first one of the at least two threads comprises a basis software layer (4) and an application software layer,
**characterized in that:**
- the time-tuple (TT) is generated at the basis software layer (4) of the first one of the at least two cores (1) and/or of the first one of the at least two threads and is sent from the basis software layer (4) of the first one of the at least two cores (1) and/or of the first one of the at least two threads via the application software layer of the first one of the at least two cores (1) and/or of the first one of the at least two threads to the memory (31).

6. The method according to claim 5, **characterized in that** a counter and a checksum (EE) are added, at the application layer of the first one of the at least two cores (1) and/or of the first one of the at least two threads, to the time-tuple (TT) before the time-tuple (TT) is sent from the application layer to the memory (31).

7. The method according to claim 6, **characterized in that** the counter and the checksum (EE) are saved together with the time-tuple (TT) in the memory (31).

8. The method according to claim 6 or 7, **characterized in that** the second one of the at least two cores (2) and/or the second one of the at least two threads checks whether there was a communication failure based on the counter and the checksum (EE) before, during or after generating the timestamp (TS).

9. A control unit (10) for a vehicle,
- wherein the control unit (10) comprises at least two cores (1, 2) and/or is configured to carry out at least two threads optionally simultaneously,
- wherein the control unit (10) comprises a memory (31) being accessible by the at least two cores (1, 2) and/or the at least two threads, and a hardware counter (51) being accessible by the at least two cores (1, 2) and/or the at least two threads,
**characterized in that:**
- a first one of the at least two cores (1) a first one of the at least two threads is configured to generate a time-tuple (TT) including a master time and a value (V1) of the hardware counter (51) at a time of generating the time-tuple (TT),
- the first one of the two cores (1) and/or the first one of the at least two threads is configured to save the generated time-tuple (TT) in the memory (31), and
- a second one of the two cores (2) and/or a second one of the at least two threads is configured to generate a timestamp (TS) based on the saved time-tuple (TT) and a value (V2) of the hardware counter (51) at a time of generating the timestamp (TS).

10. The control unit (10) according to claim 9, **characterized in that** the control unit (10) is configured to carry out the method according to any one of claims 2 to 8.
